# EUROPÄISCHE PATENTANMELDUNG

(11) **EP 4 607 789 A1**
(43) Veröffentlichungstag der Anmeldung: **27.08.2025**
(21) Anmeldenummer: 25159382.8
(22) Anmeldetag: 21.02.2025
(51) Int. Cl.: H02S 40/12

(54) **HEIZEINRICHTUNG UND SYSTEM ZUR BEHEIZUNG VON PHOTOVOLTAIKMODULEN**

(30) Priorität: 26.02.2024 DE 102024105288
(71) Anmelder: Schwankl, Peter, 94566 Riedlhütte (DE)
(72) Erfinder: Schwankl, Peter, 94566 Riedlhütte (DE)
(74) Vertreter: Wolf, Gerhard

(57) **Zusammenfassung**

Die Erfindung betrifft eine Heizeinrichtung für Photovoltaikmodule (10) umfassend eine Trägerplatte (2) und mehrere an der Trägerplatte (2) angeordnete Stützelemente (3, 3.1), mittels denen die Heizeinrichtung (1) in einem Modulrahmen (11) eines Photovoltaikmoduls (10) fixierbar ist, wobei die Trägerplatte (2) dazu ausgebildet ist, unterhalb und vertikal beabstandet zu einem Solarzellenträger (12) des Photovoltaikmoduls (10) angeordnet zu werden, wobei die Trägerplatte (2) zumindest ein Heizelement (4) und eine Steuereinheit (5) zur Steuerung des Heizelements (4) aufweist, wobei die Heizeinrichtung (1) eine Einrichtung (6) zur Bestimmung der Temperatur der Trägerplatte (2) und eine Einrichtung (7) zur Bestimmung der Temperatur des Solarzellenträgers (12) umfasst, wobei die Steuereinheit (5) dazu ausgebildet ist, abhängig von einer Aktivierungsinformation, die von einer Zentralsteuerung (Z) bereitgestellt wird, zumindest zeitweise das Heizelement (4) zu aktivieren und ein Abtauen von auf das Photovoltaikmodul (10) fallenden Schnee zu bewirken.

## Beschreibung

Die Erfindung betrifft eine Heizeinrichtung und ein System zur Beheizung von Photovoltaikmodulen.

Stromerzeugungseinrichtungen auf Basis von Photovoltaikmodulen sind hinlänglich bekannt. Dabei werden mehrere flächig ausgebildete Photovoltaikmodule in einem Raster nebeneinander angeordnet und miteinander verbunden, um durch die Sonne erzeugte Strahlungsenergie in elektrischen Strom umzuwandeln. Die Photovoltaikmodule werden dabei auf Gebäudedächern oder sonstigen Aufständerungen befestigt.

Im Winter kann sich bei Schneefall eine Schneeschicht auf den Photovoltaikmodulen ablagern. Dies ist zum einen nachteilig für den Ertrag der Stromerzeugungseinrichtung, da die Schneeschicht die Solarzellen abdeckt und damit die Strahlungsenergie nicht zu den Solarmodulen gelangen kann. Ein weiterer Nachteil ist, dass sich speziell in Regionen, in denen hohe Schneelasten auftreten, beträchtliche Schneemengen auf den Photovoltaikmodulen ablagern können, die eine hohe mechanische Beanspruchung der Photovoltaikmodule hervorrufen. Als Folge dieser mechanischen Belastung kann eine dauerhafte Beschädigung der Photovoltaikmodule auftreten, insbesondere derart, dass der Modulrahmen dauerhaft verformt und damit das Photovoltaikmodul zerstört wird.

Ausgehend hiervon ist es Aufgabe der Erfindung, eine Heizeinrichtung für ein Photovoltaikmodul anzugeben, die eine dauerhafte Ablagerung von Schnee auf dem Photovoltaikmodul wirksam verhindert und einfach montierbar ist.

Die Aufgabe wird durch eine Heizeinrichtung mit den Merkmalen des unabhängigen Patentanspruchs 1 gelöst. Bevorzugte Ausführungsformen sind Gegenstand der Unteransprüche. Ein System zur Beheizung mehrerer Photovoltaikmodule ist Gegenstand des nebengeordneten Patentanspruchs 9.

Die Erfindung bezieht sich auf eine Heizeinrichtung für ein Photovoltaikmodul. Die Heizeinrichtung umfasst eine Trägerplatte und mehrere an der Trägerplatte angeordnete Stützelemente, mittels denen die Heizeinrichtung in einem Modulrahmen eines Photovoltaikmoduls fixierbar ist. Die Fixierung ist insbesondere eine lösbare, klemmende Fixierung, insbesondere ohne Verschraubungen oder Verkleben mit dem Photovoltaikmodul. Die Trägerplatte ist dazu ausgebildet, unterhalb und vertikal beabstandet zu einem Solarzellenträger des Photovoltaikmoduls angeordnet zu werden. Die Trägerplatte weist zumindest ein Heizelement und eine Steuereinheit zur Steuerung des Heizelements auf.

Die Heizeinrichtung umfasst zudem eine Einrichtung zur Bestimmung der Temperatur der Trägerplatte und eine Einrichtung zur Bestimmung der Temperatur des Solarzellenträgers. Damit kann die Temperatur bestimmt werden, die im Bereich der Heizeinrichtung selbst vorliegt sowie die Temperatur des Solarzellenträgers selbst, der oberhalb und beabstandet zu der Heizeinrichtung vorgesehen ist.

Die Steuereinheit ist dazu ausgebildet, abhängig von einer Aktivierungsinformation, die von einer Zentralsteuerung bereitgestellt wird, zumindest zeitweise das Heizelement zu aktivieren und ein Abtauen von auf das Photovoltaikmodul fallenden Schnee zu bewirken.

Der technische Vorteil der Heizeinrichtung besteht darin, dass diese einfach und vorzugsweise auch werkzeuglos an dem Photovoltaikmodul befestigbar ist und über die Temperatursensoren eine gute Steuerung der Heizeinrichtung derart möglich ist, dass bei einsetzendem Schneefall das Photovoltaikmodul auf eine leicht erhöhte Temperatur erwärmt wird, so dass sich auf dem Photovoltaikmodul keine Schneeschicht bilden kann, sondern die Schneeflocken nach dem Auftreffen auf dem Photovoltaikmodul schmelzen und das Schmelzwasser abläuft. Über die Zentralsteuerung ist es möglich, mehrere Heizeinrichtungen derart zu steuern, dass mit einer begrenzt zur Verfügung stehenden elektrischen Leistung, beispielsweise mit einer einphasigen, mit 16A abgesicherten 230V-Stromversorgung eine Vielzahl von Photovoltaikmodule getaktet beheizt werden, ohne die Stromversorgung zu überlasten.

Gemäß einem Ausführungsbeispiel ist das Heizelement eine flächig ausgebildete Heizmatte. Damit kann eine flächige Beheizung des Photovoltaikmoduls ohne punktuell hohe thermische Belastung erreicht werden.

Gemäß einem Ausführungsbeispiel erstreckt sich die Trägerplatte flächig entlang des Photovoltaikmoduls und überspannt zumindest die Hälfte der Fläche des Solarzellenträgers. Damit bildet die Trägerplatte eine flächige Auflage für das Heizelement, insbesondere die Heizmatte, und gleichzeitig die tragende Struktur der Heizeinrichtung, die klemmend im Modulrahmen des Photovoltaikmoduls fixiert wird.

Gemäß einem Ausführungsbeispiel ist zumindest ein längenverstellbares Stützelement vorgesehen, mittels dem die Heizeinrichtung spreizend in dem Modulrahmen befestigbar ist. Der Modulrahmen weist unterhalb des Solarzellenträgers eine insbesondere umlaufend ausgebildete Nut auf, in die die freien Enden der Stützelemente eingefügt werden können. Durch die Längenverstellung der Stützelemente lassen sich diese auf eine Länge ausziehen, so dass eine Spreizwirkung zwischen zwei einander gegenüberliegenden Stützelementen erreicht wird.

Gemäß einem Ausführungsbeispiel ist die Heizeinrichtung mittels der Stützelemente in einem bei schräger Anordnung des Photovoltaikmoduls tieferliegenden Modulabschnitt eingespreizt fixierbar. Beispielsweise wird zumindest ein unteres Stützelement in die zum Modulinneren hin offene Nut des unteren Modulrahmenabschnitts eingesetzt. Ein Paar von einander gegenüberliegenden längenverstellbaren Stützelementen, das beabstandet zu dem zumindest einen unteren Stützelement vorgesehen ist, dient einer seitlichen Fixierung der Heizeinrichtung in deren oberen Bereich im Modulrahmen.

Gemäß einem Ausführungsbeispiel ist ein Anschluss zur Versorgung der Heizeinrichtung mit elektrischer Energie und eine Steuerschnittstelle zur Kopplung der Heizeinrichtung mit der Zentralsteuerung vorgesehen. Über den Anschluss lässt sich die Heizeinrichtung mit weiteren Heizeinrichtungen koppeln, so dass über eine Energieversorgungseinheit, beispielsweise ein Netzteil, mehrere Heizeinrichtungen gleichzeitig mit elektrischer Energie versorgen lassen. Die Steuerschnittstelle kann beispielsweise eine Bus-Schnittstelle sein, so dass sich mehrere über den Bus miteinander und mit der Zentralsteuerung gekoppelte Heizeinrichtungen gezielt steuern lassen.

Gemäß einem Ausführungsbeispiel ist auf der Trägerplatte zumindest ein Lüfter zur Erzeugung eines Luftstroms entlang der Unterseite des Solarzellenträgers vorgesehen. Durch ein Aktivieren des Lüfters kann die Hinterlüftung des Photovoltaikmoduls verbessert werden, was zu einer höheren Effizienz bei hoher Außentemperatur führt.

Gemäß einem Ausführungsbeispiel ist die Steuereinheit dazu konfiguriert, das Heizelement der Heizeinrichtung in Abhängigkeit von der Temperatur der Trägerplatte und/oder der Temperatur des Solarzellenträgers zu aktivieren und/oder deaktivieren. Damit kann eine gesteuerte Temperierung des Solarzellenträgers derart erreicht werden, dass dieser eine leicht über dem Gefrierpunkt liegende Temperatur beispielsweise im Bereich zwischen 2°C und 10°C, insbesondere zwischen 2°C und 5°C, aufweist und sich damit bei Schneefall keine dauerhafte Schneedecke am Photovoltaikmodul bildet, sondern die auf das Photovoltaikmodul fallenden Schneeflocken unmittelbar tauen.

Gemäß einem weiteren Aspekt wird ein System zur Beheizung mehrerer Photovoltaikmodule offenbart. Das System umfasst mehrere Heizeinrichtungen gemäß einem der vorher beschriebenen Ausführungsbeispiele und eine Zentralsteuerung, die über eine Steuerleitung mit den Heizeinrichtungen koppelbar ist. Die Zentralsteuerung weist einen Temperatursensor und eine Sensorik zur Niederschlagserkennung auf. Die Zentralsteuerung ist dazu konfiguriert, in Abhängigkeit von durch die Sensorik erkanntem Niederschlag, der mittels der vom Temperatursensor erfassten Temperatur oder einer sonstigen Information als Schnee klassifiziert ist, die Heizelemente zumindest eines Teils der Heizeinrichtungen zu aktivieren.

Der technische Vorteil des Systems besteht darin, dass die Zentralsteuerung eine gezielte Steuerung der Heizelemente derart vornehmen kann, dass bei Schneefall eine dauerhafte Ablagerung von Schnee auf den Photovoltaikmodulen verhindert wird.

Gemäß einem Ausführungsbeispiel des Systems ist die Sensorik zur Klassifizierung des Niederschlags ausgebildet. Insbesondere kann die Sensorik dazu ausgebildet sein, zu bestimmen, ob es sich bei dem Niederschlag um Schnee handelt oder nicht. Damit ist durch die Zentralsteuerung eine zuverlässige Aktivierung der Heizeinrichtungen immer dann möglich, wenn Niederschlag in Form von Schnee fällt.

Gemäß einem Ausführungsbeispiel des Systems ist die Zentralsteuerung dazu ausgebildet, die Heizelemente einer ersten Gruppe von Heizeinrichtungen und die Heizelemente einer zweiten Gruppe von Heizeinrichtungen zeitlich getaktet in unterschiedlichen Zeiträumen zu aktivieren. Damit kann bei begrenzt verfügbarer elektrischer Leistung durch die abwechselnde Taktung der Gruppen von Heizeinrichtungen in getrennten Zeiträumen verhindert werden, dass die maximal verfügbare elektrische Leistung überschritten wird und trotzdem ein sicheres Abtauen der Photovoltaikmodule erreicht wird.

Gemäß einem Ausführungsbeispiel des Systems ist die Zentralsteuerung dazu konfiguriert, jeweils Temperaturinformationen zur Temperatur der Trägerplatte und/oder der Temperatur des Solarzellenträgers von den Heizeinrichtungen der Photovoltaikmodule zu empfangen und die Heizeinrichtungen der Photovoltaikmodule in Abhängigkeit dieser Temperaturinformationen zu steuern. Damit kann die Zentralsteuerung die Aktivierung der Heizelemente der Heizeinrichtungen in Abhängigkeit der tatsächlichen Temperatur, die an der jeweiligen Heizeinrichtung oder dem Solarzellenträger, der von der Heizeinrichtung geheizt wird, steuern und damit ein energiesparendes und trotzdem hinreichend gutes Abtauen der Photovoltaikmodule erreichen.

Gemäß einem Ausführungsbeispiel des Systems weist die Zentralsteuerung eine Sensorik zur Erfassung der Sonneneinstrahlung und/oder zur Erfassung der Windstärke auf. Alternativ weist die Zentralsteuerung eine Schnittstelle zum Empfang von Informationen zur Außentemperatur, zur Sonneneinstrahlung und/oder zur Windstärke auf. Damit können der Grad der Sonneneinstrahlung und/oder die Windstärke dazu herangezogen werden, zu entscheiden, ob eine Aktivierung der Heizeinrichtungen nötig ist oder nicht.

Gemäß einem Ausführungsbeispiel des Systems weist die Zentralsteuerung eine Netzwerkschnittstelle zum Datenaustausch und zur Fernsteuerung des Systems auf. Damit kann beispielsweise das System aktiviert bzw. deaktiviert und/oder online überwacht werden.

Gemäß einem Ausführungsbeispiel des Systems ist die Zentralsteuerung dazu ausgebildet, Lüfter, die auf den Heizeinrichtungen der Photovoltaikmodule vorgesehen sind, in Abhängigkeit der Außentemperatur und der Temperatur des Solarzellenträgers zu steuern. Damit kann bei hoher Sonneneinstrahlung im Sommer die Hinterlüftung der Photovoltaikmodule verbessert und damit deren Effizienz gesteigert werden.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft und schematisch ein Photovoltaikmodul mit daran angeordneter Heizeinrichtung in einer seitlichen Darstellung;
- Fig. 2: beispielhaft und schematisch eine Heizeinrichtung, die eingespannt in einem Photovoltaikmodul gehalten ist;
- Fig. 3: beispielhaft und schematisch eine Detaildarstellung einer Heizeinrichtung und einem längenverstellbaren Stützelement, das in einen Profilabschnitt des Modulrahmens des Photovoltaikmoduls eingreift; und
- Fig. 4: beispielhaft und schematisch ein System zur Beheizung mehrerer Photovoltaikmodule.

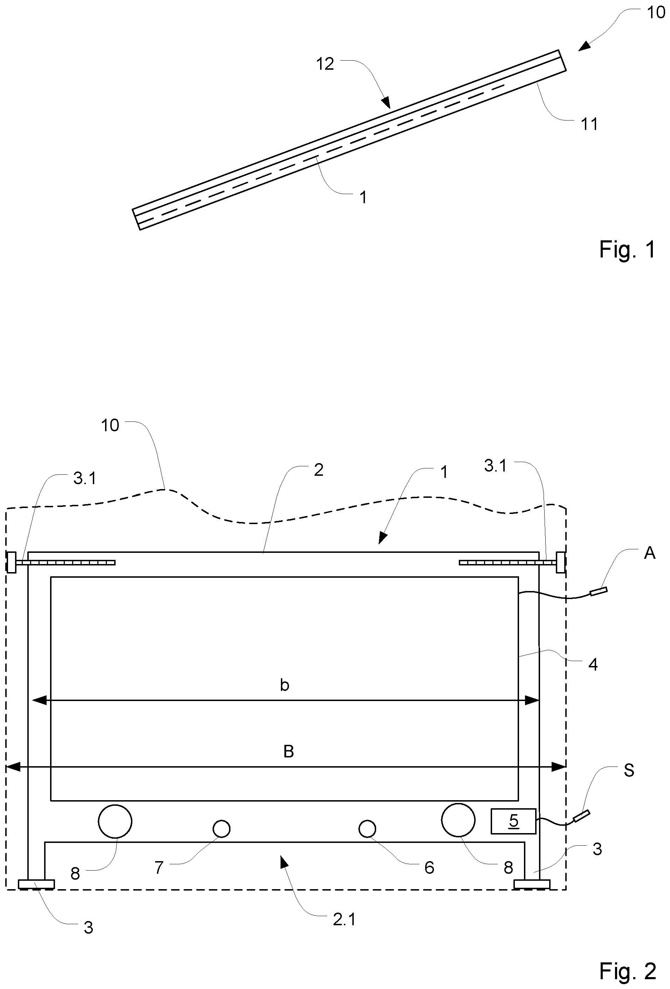

Figur 1 zeigt beispielhaft ein schräg ausgerichtetes Photovoltaikmodul 10 mit einer daran angeordneten Heizeinrichtung 1. Das Photovoltaikmodul 10 umfasst einen Modulrahmen 11 und einen in diesem Modulrahmen 11 aufgenommenen Solarzellenträger 12. Auf dem Solarzellenträger 12 sind Solarzellen angeordnet, die die einfallende Strahlungsenergie in elektrischen Strom umsetzen. Die Heizeinrichtung 1 ist unterhalb des Solarzellenträgers 12 und beabstandet zu diesem vorgesehen, d.h. die Heizeinrichtung 1 liegt nicht direkt am Solarzellenträger 12 an, sondern ist von diesem mittels eines Luftspalts oder einem zumindest teilweise wärmeleitenden Abstandselement beabstandet.

Das Photovoltaikmodul 10 weist eine Schrägstellung auf, so dass ein unterer Bereich des Photovoltaikmoduls 10 tiefer angeordnet ist als ein oberer Bereich. Die Heizeinrichtung 1 ist vorzugsweise im unteren Bereich des Photovoltaikmoduls 10 angeordnet, und zwar derart, dass die Heizeinrichtung 1 sich nur teilweise über die Fläche des Photovoltaikmoduls 10 erstreckt und nicht bis in den oberen Bereich des Photovoltaikmoduls 10 reicht. Durch die Schrägstellung des Photovoltaikmoduls 10 wird eine Zirkulation der von der Heizeinrichtung 1 erzeugten Wärme erreicht, so dass diese an der Unterseite des Solarzellenträgers 12 entlang nach oben aufsteigt und dabei auch der obere Bereich des Photovoltaikmoduls 10 mit Wärme beaufschlagt und damit abgetaut wird. Es versteht sich, dass alternativ die Heizeinrichtung 1 auch die gesamte oder im Wesentlichen gesamte Modulfläche unterseitig überdecken kann.

Fig. 2 zeigt die Heizeinrichtung 1 in einem größeren Detaillierungsgrad. Die Heizeinrichtung 1 umfasst eine Trägerplatte 2. Die Trägerplatte 2 ist ein flächig ausgebildetes Element, das als mechanischer Träger fungiert. Es ist beispielsweise aus einem metallischen Flachmaterial, insbesondere aus einem Aluminium-Blech-Zuschnitt gebildet. Die Trägerplatte 2 kann beispielsweise eine Materialstärke von 2 bis 3 mm aufweisen.

Die Trägerplatte 2 kann einen Ausschnitt 2.1 aufweisen. Dieser Ausschnitt ist vorzugsweise an einem unteren Rand an der Trägerplatte 2 vorgesehen, so dass dieser Ausschnitt 2.1 bei Anordnung der Heizeinrichtung 1 an dem Photovoltaikmodul 10 im unteren Bereich des Photovoltaikmoduls 10 zu liegen kommt. Dadurch kann eine verbesserte Hinterlüftung des Photovoltaikmoduls 10 erreicht werden.

An der Trägerplatte 2 sind mehrere Stützelemente 3, 3.1 vorgesehen. Die Stützelemente dienen der klemmenden Befestigung der Trägerplatte 2 an dem Photovoltaikmodul 10. Insbesondere sind an der Trägerplatte 2 feststehende Stützelemente 3 und in der Länge verstellbare Stützelemente 3.1 vorgesehen. Die feststehenden Stützelemente 3 sind beispielsweise direkt an stegförmigen Abschnitten der Trägerplatte 2 vorgesehen, die durch den Ausschnitt 2.1 gebildet sind, oder aber sonstigen Bereichen der Trägerplatte 2. Die feststehenden Stützelemente 3 weisen freiendseitig Pufferelemente auf, die verformbare Anlageelemente an dem Modulrahmen 11 bilden. Die feststehenden Stützelemente 3 sind vorzugsweise dazu vorgesehen, innenseitig in einem unteren Abschnitt des Modulrahmens 11 angeordnet zu werden, der in Installationsposition des Photovoltaikmoduls 10 im tiefstliegenden Bereich vorgesehen ist und vorzugsweise horizontal oder im Wesentlichen horizontal verläuft. Damit wird die Abstützung der Heizeinrichtung 1 im Photovoltaikmodul 10 von der Schwerkraft der Heizeinrichtung 1 unterstützt.

Zudem sind längenverstellbare Stützelemente 3.1 vorgesehen, und zwar beabstandet zu den Stützelementen 3 und vorzugsweise in einem den Stützelementen 3 gegenüberliegenden oberen Abschnitt der Trägerplatte 2. Die Stützelemente 3.1 sind vorzugsweise parallel zu dem Abschnitt des Modulrahmens 11 längenverstellbar, an dem die Stützelemente 3 zur Anlage kommen. Damit kann die Heizeinrichtung 1 durch die Längenverstellung der Stützelemente 3.1 in einer Querrichtung im Modulrahmen 11 verklemmt werden.

Die Stützelemente 3.1 weisen vorzugsweise jeweils eine Rasterklemmeinrichtung auf. Diese Rasterklemmeinrichtung umfasst ein stabförmiges Stützteil, das in unterschiedlichen Positionen rastend gegenüber einem Basisteil, das mit der Trägerplatte 2 verbunden ist, fixierbar ist. Damit kann der seitliche Überstand des freien Endes des Stützelements 3.1 gegenüber der Trägerplatte 2 verändert werden, wodurch eine Anpassung der Länge an die Breite B des Photovoltaikmoduls 10 ermöglicht wird, an das die Heizeinrichtung 1 angeordnet werden soll.

Die Breite b der Trägerplatte 2 ist derart gewählt, dass diese zumindest mehr als 50%, insbesondere mehr als 70% der horizontal gemessenen Breite B des Photovoltaikmoduls 10 überspannt.

Auf der Trägerplatte 2 ist ein Heizelement 4 vorgesehen. Das Heizelement 4 ist insbesondere eine Heizmatte. Die Heizmatte kann insbesondere eine Kohlefaser- oder Carbon-Heizmatte sein. Damit kann eine flächige Erwärmung des Solarzellenträgers 12 ohne punktuelle Wärmeeinträge erreicht werden. Vorzugsweise überspannt das Heizelement 4 in horizontaler und vertikaler Richtung mehr als 50% der Länge und Breite der Trägerplatte 2. Die Heizmatte 4 sowie weitere elektrische Verbraucher der Heizeinrichtung 1 werden über einen Anschluss A mit elektrischer Energie versorgt.

Die Heizeinrichtung 1 weist eine Steuereinheit 5 auf. Die Steuereinheit 5 ist dazu ausgebildet, das Heizelement 4 zu steuern. Die Steuereinheit 5 ist dazu ausgebildet, das Heizelement 4 in Abhängigkeit von der Temperatur der Heizeinrichtung 1 selbst und/oder der Temperatur des Photovoltaikmoduls 10, an dem die Heizeinrichtung 1 angeordnet ist, zu steuern. Die Heizeinrichtung 1 weist hierzu einen ersten Temperatursensor 6 auf, mittels dem die Temperatur des Heizelements 4 oder der damit verbundenen Trägerplatte 2 messbar ist. Zudem weist die Heizeinrichtung 1 einen zweiten Temperatursensor 7 auf, mittels dem die Temperatur des Photovoltaikmoduls 10 bestimmbar ist. Der zweite Temperatursensor 7 kann an der Heizeinrichtung 1 selbst vorgesehen sein und berührungslos die Temperatur des Photovoltaikmoduls 10 messen, beispielsweise über die Detektion von Infrarotstrahlung, die von dem Photovoltaikmodul 10 abgestrahlt wird. Alternativ kann der zweite Temperatursensor 7 direkt an der Unterseite des Solarzellenträgers des Photovoltaikmoduls 10 vorgesehen sein und mittels einer Kabelverbindung mit der Heizeinrichtung 1 verbunden sein. Über die mittels des ersten und zweiten Temperatursensor 6, 7 gemessenen Temperaturwerte lässt sich die Heizeinrichtung 1 derart steuern, dass die Heizeinrichtung zum einen nicht überhitzt, zum anderen ein energiesparendes, aber trotzdem sicheres Abtauen des Schnees möglich ist, der auf das Photovoltaikmodul 10 fällt.

Die Heizeinrichtung 1 weist eine Steuerschnittstelle S auf, über die die Heizeinrichtung 1 mit einer übergeordneten Zentralsteuerung Z verbindbar ist. Die Zentralsteuerung Z kann über die Steuerschnittstelle S Steuerinformationen an die Steuereinheit 5 übertragen, die durch die Steuereinheit 5 umgesetzt werden. Dies kann beispielsweise das Aktivieren oder Deaktivieren des Heizelements 4 oder die Steuerung der Heizleistung des Heizelements 4 betreffen.

Auf der Trägerplatte 2 kann zudem zumindest ein Lüfter 8 vorgesehen sein. Der Lüfter 8 kann durch die Steuereinheit 5 angesteuert werden, um einen Luftstrom entlang der Rückseite des Solarzellenträgers zu bewirken. Dadurch kann die Hinterlüftung des Photovoltaikmoduls 10 verbessert werden.

Zudem kann die Heizeinrichtung 1 einen Gewichtssensor aufweisen, mittels dem das auf dem Photovoltaikmodul 10 lastende Gewicht messbar ist. Dadurch kann insbesondere ein auf dem Photovoltaikmodul 10 lastendes Gewicht von Schnee etc. bestimmt werden.

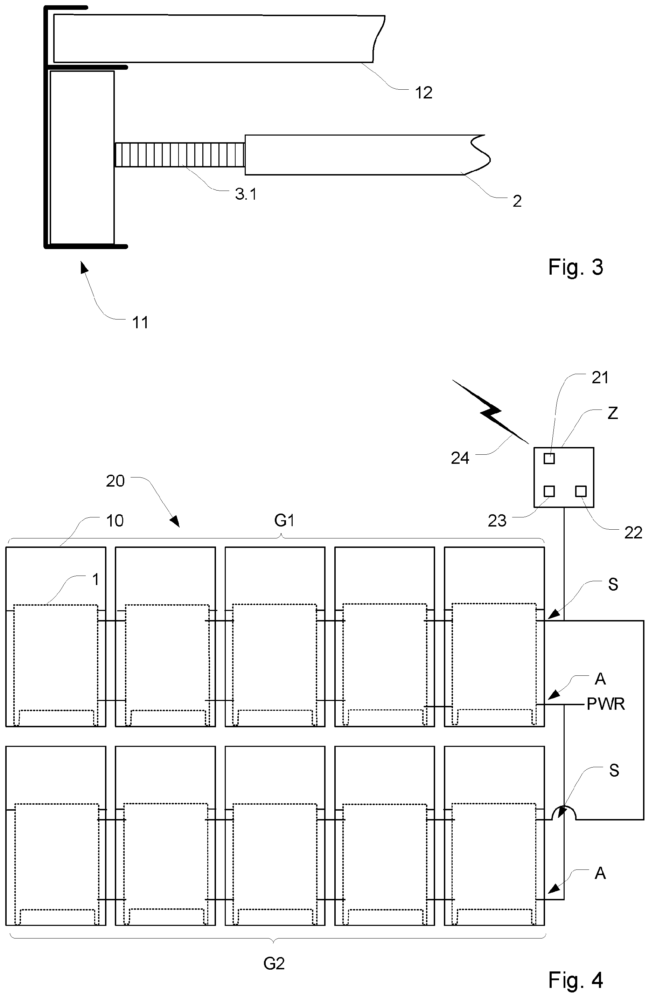

Fig. 3 illustriert, wie die Stützelemente 3, 3.1 in den Modulrahmen 11 eingreifen und dabei die Heizeinrichtung 1 am Photovoltaikmodul 10 fixieren. Der Modulrahmen 11 weist beispielsweise ein im Querschnitt E-förmiges Profil auf, d.h. die Stege des Profils begrenzen zwei nutartige Aussparungen. In die erste Aussparung ist vorzugsweise der Solarzellenträger 12 randseitig eingebracht. In die weitere Aussparung, die unterhalb des Solarzellenträgers 12 vorgesehen ist, kann das freie Ende des Stützelements 3, 3.1 eingebracht werden. Die Montage der Heizeinrichtung 1 erfolgt vorzugswiese derart, dass die feststehenden Stützelemente 3 zunächst in den unteren Bereich des Montagerahmens 11 eingestellt werden. Anschließend werden bei einer Ausrichtung der Heizeinrichtung 1 parallel zum Solarzellenträger 12 die längenverstellbaren Stützelemente 3.1 ausgezogen, so dass diese in die weitere Aussparung des Modulrahmens eingreifen (wie in Fig. 3 gezeigt) und damit die Heizeinrichtung 1 insgesamt klemmend am Photovoltaikmodul 10 befestigt ist.

Fig. 4 zeigt ein System 20 umfassend mehrere Photovoltaikmodule 10, die jeweils eine Heizeinrichtung 1 aufweisen. Die Photovoltaikmodule 10 sind im gezeigten Ausführungsbeispiel in zwei Gruppen unterteilt, und zwar in die erste Gruppe G1 und die zweite Gruppe G2. Es versteht sich, dass sämtliche Photovoltaikmodule 10 einer Gruppe zugeordnet sein können und auch mehr als die in diesem Ausführungsbeispiel gezeigten zwei Gruppen G1, G2 vorgesehen sein können. Über die Anschlüsse A sind die Heizeinrichtungen 1 mit einer externen Stromversorgung verbunden, die in Figur 4 mit PWR gekennzeichnet ist. Über die Steuerschnittstellen S sind die Heizeinrichtungen 1 mit der Zentralsteuerung Z verbunden.

Die Zentralsteuerung Z weist vorzugsweise einen Temperatursensor 21 auf, mittels dem die Umgebungstemperatur im Bereich der Zentralsteuerung Z ermittelt werden kann. Dadurch kann insbesondere ermittelt werden, ob die Außentemperatur in einem Bereich liegt, in dem ein Niederschlag als Schnee zu erwarten ist. Des Weiteren weist die Zentralsteuerung Z vorzugsweise eine Sensorik 22 auf, die zur Niederschlagserkennung und vorzugsweise auch zur Bestimmung der Art des Niederschlags (z.B. Schnee, Regen, etc.) ausgebildet ist. Zudem kann die Zentralsteuerung Z eine Sensorik 23 aufweisen, mittels der die Sonneneinstrahlung im Bereich der Zentralsteuerung und/oder die Windstärke erfasst werden kann. Durch den Temperatursensor 21 sowie die Sensorik 22 und 23 können die Temperatur und die Witterungsbedingungen ermittelt werden, die für den Betrieb und die Steuerung der Heizeinrichtungen 1 vorteilhaft sind.

Die Zentralsteuerung Z kann zudem dazu ausgebildet sein, externe Wetterdaten, beispielsweise aus dem Internet zu empfangen, und diese zu verwenden, um die Heizeinrichtungen 1 zu steuern.

Die Zentralsteuerung Z kann zudem dazu ausgebildet sein, von den jeweiligen Heizeinrichtungen 1 Temperaturinformationen hinsichtlich der Temperatur der Trägerplatte 2 oder des auf dieser Trägerplatte 2 angeordneten Heizelements 4 und/oder der Temperatur des Solarzellenträger 12, der von der jeweiligen Heizeinrichtung 1 temperiert wird, zu empfangen. Damit kann die Zentralsteuerung Z die Heizeinrichtungen 1 geeignet steuern, sodass sämtliche Photovoltaikmodule 10 in einem Temperaturbereich gehalten werden, in dem ein dauerhaftes Ablagern von Schnee auf den Photovoltaikmodulen 10 verhindert wird, dabei aber die Photovoltaikmodule 10 nicht übermäßig und möglichst energiesparend erwärmt werden.

Um mit einer begrenzten elektrischen Leistung eine Gesamtanlage bestehend aus einer Vielzahl von Photovoltaikmodulen 10 von Schnee befreit zu halten, können die Heizeinrichtungen 1 getaktet betrieben werden. Hierzu werden sämtliche Heizeinrichtungen 1, die die Gesamtanlage aufweist, gruppiert und die Gruppen von Heizeinrichtungen 1 werden sequenziell aktiviert, sodass die zu einem Zeitpunkt aktivierten Heizeinrichtungen 1 insgesamt eine elektrische Leistungsaufnahme haben, die kleiner ist als die zur Verfügung stehende elektrische Leistung.

Die Zentralsteuerung Z kann über eine Netzwerkschnittstelle 24 von extern gesteuert werden bzw. es können über die Netzwerkschnittstelle 24 Daten aus der Zentralsteuerung Z abgerufen werden. Die Netzwerkschnittstelle 24 kann dabei eine drahtlose Netzwerkschnittstelle, beispielsweise eine WLAN-Schnittstelle, oder aber auch eine drahtgebundene Netzwerkschnittstelle sein. Zur Auswertung von Daten der Heizeinrichtungen 1, die mit der Zentralsteuerung Z gekoppelt sind, kann eine Speichereinheit vorgesehen sein, in der Daten der einzelnen Heizeinrichtungen 1 oder von mehreren Heizeinrichtungen 1 zusammengefasste Daten gespeichert werden. Damit ist es möglich, zu einem späteren Zeitpunkt eine Auswertung der Daten vorzunehmen. Vorzugsweise ist es über die Zentralsteuerung Z auch möglich, ein Update der Software der Zentralsteuerung Z vorzunehmen.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Heizeinrichtung
- 2: Trägerplatte
- 2.1: Ausschnitt
- 3: Stützelement
- 3.1: längenverstellbares Stützelement
- 4: Heizelement
- 5: Steuereinheit
- 6: erster Temperatursensor
- 7: zweiter Temperatursensor
- 8: Lüfter
- 10: Photovoltaikmodul
- 11: Modulrahmen
- 12: Solarzellenträger

- 20: System
- 21: Temperatursensor
- 22: Sensorik
- 23: Sensorik
- 24: Netzwerkschnittstelle

- A: Anschluss
- b: Breite der Heizeinrichtung
- B: Breite des Photovoltaikmoduls
- G1: erste Gruppe
- G2: zweite Gruppe
- S: Steuerschnittstelle
- Z: Zentralsteuerung

## Patentansprüche

1. Heizeinrichtung für Photovoltaikmodule (10) umfassend eine Trägerplatte (2) und mehrere an der Trägerplatte (2) angeordnete Stützelemente (3, 3.1), mittels denen die Heizeinrichtung (1) in einem Modulrahmen (11) eines Photovoltaikmoduls (10) fixierbar ist, wobei die Trägerplatte (2) dazu ausgebildet ist, unterhalb und vertikal beabstandet zu einem Solarzellenträger (12) des Photovoltaikmoduls (10) angeordnet zu werden, wobei die Trägerplatte (2) zumindest ein Heizelement (4) und eine Steuereinheit (5) zur Steuerung des Heizelements (4) aufweist, wobei die Heizeinrichtung (1) eine Einrichtung (6) zur Bestimmung der Temperatur der Trägerplatte (2) und eine Einrichtung (7) zur Bestimmung der Temperatur des Solarzellenträgers (12) umfasst, wobei die Steuereinheit (5) dazu ausgebildet ist, abhängig von einer Aktivierungsinformation, die von einer Zentralsteuerung (Z) bereitgestellt wird, zumindest zeitweise das Heizelement (4) zu aktivieren und ein Abtauen von auf das Photovoltaikmodul (10) fallenden Schnee zu bewirken.

2. Heizeinrichtung nach Anspruch 1, **dadurch gekennzeichnet, dass** das Heizelement (4) eine flächig ausgebildete Heizmatte ist.

3. Heizeinrichtung nach Anspruch 1 oder 2, **dadurch gekennzeichnet, dass** sich die Trägerplatte (2) flächig entlang des Photovoltaikmoduls (10) erstreckt und zumindest die Hälfte der Fläche des Solarzellenträgers (12) überspannt.

4. Heizeinrichtung nach einem der vorhergehenden Ansprüche, **dadurch gekennzeichnet, dass** zumindest ein längenverstellbares Stützelement (3.1) vorgesehen ist, mittels dem die Heizeinrichtung (1) spreizend in dem Modulrahmen (11) befestigbar ist.

5. Heizeinrichtung nach einem der vorhergehenden Ansprüche, **dadurch gekennzeichnet, dass** die Heizeinrichtung (1) mittels der Stützelemente (3, 3.1) in einem bei schräger Anordnung des Photovoltaikmoduls (10) tieferliegenden Modulabschnitt eingespreizt fixierbar ist.

6. Heizeinrichtung nach einem der vorhergehenden Ansprüche, **dadurch gekennzeichnet, dass** ein Anschluss (A) zur Versorgung der Heizeinrichtung (1) mit elektrischer Energie und eine Steuerschnittstelle (S) zur Kopplung der Heizeinrichtung (1) mit der Zentralsteuerung (Z) vorgesehen ist.

7. Heizeinrichtung nach einem der vorhergehenden Ansprüche, **dadurch gekennzeichnet, dass** auf der Trägerplatte (2) zumindest ein Lüfter (8) zur Erzeugung eines Luftstroms entlang der Unterseite des Solarzellenträgers (12) vorgesehen ist.

8. Heizeinrichtung nach einem der vorhergehenden Ansprüche, **dadurch gekennzeichnet, dass** die Steuereinheit (5) dazu konfiguriert ist, das Heizelement (4) der Heizeinrichtung (1) in Abhängigkeit von der Temperatur der Trägerplatte (2) und/oder der Temperatur des Solarzellenträgers (2) zu aktivieren und/oder deaktivieren.

9. System (20) zur Beheizung mehrerer Photovoltaikmodule (10) umfassend mehrere Heizeinrichtungen (1) gemäß einem der vorhergehenden Ansprüche und eine Zentralsteuerung (Z), die über eine Steuerleitung mit den Heizeinrichtungen (1) koppelbar ist, wobei die Zentralsteuerung (Z) einen Temperatursensor (21) und eine Sensorik (22) zur Niederschlagserkennung aufweist und dass die Zentralsteuerung (Z) dazu konfiguriert ist, in Abhängigkeit von durch die Sensorik (22) erkanntem Niederschlag, der mittels der vom Temperatursensor erfassten Temperatur oder einer sonstigen Information als Schnee klassifiziert ist, die Heizelemente (4) zumindest eines Teils der Heizeinrichtungen (1) zu aktivieren.

10. System nach Anspruch 9, **dadurch gekennzeichnet, dass** die Sensorik (22) zur Niederschlagserkennung dazu ausgebildet ist, die Art des Niederschlags zu klassifizieren.

11. System nach Anspruch 9 oder 10, **dadurch gekennzeichnet, dass** die Zentralsteuerung (Z) dazu ausgebildet ist, die Heizelemente (4) einer ersten Gruppe (G1) von Heizeinrichtungen (1) und die Heizelemente (4) einer zweiten Gruppe (G2) von Heizeinrichtungen (1) zeitlich getaktet in unterschiedlichen Zeiträumen zu aktivieren.

12. System nach Anspruch 9 bis 11, **dadurch gekennzeichnet, dass** die Zentralsteuerung (Z) dazu konfiguriert ist, jeweils Temperaturinformationen zur Temperatur der Trägerplatte (2) und/oder der Temperatur des Solarzellenträgers (12) von den Heizeinrichtungen (1) der Photovoltaikmodule (10) zu empfangen und die Heizeinrichtungen (1) der Photovoltaikmodule (10) in Abhängigkeit dieser Temperaturinformationen zu steuern.

13. System nach einem der Ansprüche 9 bis 12, **dadurch gekennzeichnet, dass** die Zentralsteuerung (Z) eine Sensorik (23) zur Erfassung der Sonneneinstrahlung und/oder zur Erfassung der Windstärke aufweist oder dass die Zentralsteuerung (Z) eine Schnittstelle zum Empfang von Informationen zur Außentemperatur, zur Sonneneinstrahlung und/oder zur Windstärke aufweist.

14. System nach einem der Ansprüche 9 bis 13, **dadurch gekennzeichnet, dass** die Zentralsteuerung (Z) eine Netzwerkschnittstelle (24) zum Datenaustausch und zur Fernsteuerung des Systems (20) aufweist.

15. System nach einem der Ansprüche 9 bis 14, **dadurch gekennzeichnet, dass** die Zentralsteuerung (Z) dazu ausgebildet ist, Lüfter (8), die auf den Heizeinrichtungen (1) der Photovoltaikmodule (10) vorgesehen sind, in Abhängigkeit der Außentemperatur und der Temperatur des Solarzellenträgers (12) zu steuern.
